Europäisches Patentamt

European Patent Office

Office européen des brevets

(19)

(11) Numéro de publication : **0 643 504 A1**

# (12) DEMANDE DE BREVET EUROPEEN

(21) Numéro de dépôt : **94402034.6**

(22) Date de dépôt : **13.09.94**

(51) Int. Cl.$^6$ : **H04J 13/00**

(30) Priorité : **15.09.93 FR 9311007**

(43) Date de publication de la demande :
**15.03.95 Bulletin 95/11**

(84) Etats contractants désignés :
**AT BE CH DE DK ES FR GB IT LI NL SE**

(71) Demandeur : **ALCATEL MOBILE
COMMUNICATION FRANCE
10, rue de la Baume
F-75008 Paris (FR)**

(72) Inventeur : **Mourot, Christophe
36, Rue Paul Bert
F-92600 Asnieres (FR)**
Inventeur : **Olivier, Rene
7, Allee de la Beauce
F-78640 St Germain de la Grange (FR)**
Inventeur : **Le Strat, Evelyne
22, Rue Marmontel
F-75015 Paris (FR)**

(74) Mandataire : **El Manouni, Josiane
SOSPI
14-16, rue de la Baume
F-75008 Paris (FR)**

(54) **Détecteur à seuil pour système à AMRC.**

(57)    L'invention concerne un détecteur à seuil pour récepteur d'un système de transmission de signaux numériques dans un canal de transmission, notamment vers des mobiles, comprenant des moyens (21) de calcul d'un jeu de coefficients $f_n$ (24) appartenant au groupe comprenant d'une part un jeu de coefficients $c_n$ (24) de corrélation entre une première série d'échantillons numériques reçue $x_n$ par ledit récepteur et une seconde série d'échantillons numériques de référence $P_n$ connue dudit récepteur,

pour la recherche de la synchronisation dudit système, et d'autre part $\hat{h}_n$ d'une estimée de la réponse impulsionnelle dudit canal de transmission, lorsque ledit système est déjà synchronisé, et comprenant de plus des moyens (25) de calcul d'une variable de décision A telle que :

$$A = \frac{\sum_{n=0}^{L-1} |f_n|^2}{\frac{1}{N}\sum_{n=0}^{N-1} |x_n|^2}$$

où L et N sont deux nombres entiers prédéterminés.
    L'invention trouve de nombreuses applications dans les systèmes radiomobiles, par exemple pour l'acquisition de la synchronisation dans les systèmes DS-CDMA ou l'optimisation de l'estimation du canal de transmission.

EP 0 643 504 A1

Fig. 2

EP 0 643 504 A1

Le domaine de l'invention est celui des transmissions numériques, notamment vers des mobiles. Plus précisément, l'invention concerne un détecteur à seuil pour récepteurs de systèmes de transmission numérique.

Il existe essentiellement trois grands types de systèmes de transmission numérique à accès multiple, dits AMRF (FDMA en anglo-saxon), AMRT (TDMA) ou AMRC (CDMA).

L'accès multiple par répartition en fréquence (AMRF) a été le premier système historiquement utilisé. Son principe consiste a séparer les communications à transmettre en attribuant à chacune une bande de fréquence spécifique, qui peut aisément être séparée des autres par filtrage à la réception.

Il est peu utilisé aujourd'hui, du fait qu'il impose d'avoir un récepteur par canal de transmission utilisé, obligeant de ce fait à disposer un nombre considérable de récepteurs dans une station centrale si on veut être capable de converser simultanément avec un nombre important de stations réparties.

L'AMRT (Accès Multiple à Répartition dans le Temps) est un système dont le principe consiste à partager temporellement la totalité du canal de transmission : pour éviter que les informations ne se chevauchent, il n'y a qu'une seule station qui émet à la fois et, quand elle émet, elle occupe la totalité du canal.

Les systèmes d'AMRT posent notamment de difficiles problèmes d'égalisation quand le canal de transmission est perturbé par des échos ou des brouilleurs.

On connaît enfin la technique d'accès multiple à répartition par les codes (AMRC). Il s'agit d'un système qui fait appel aux techniques d'étalement de spectre.

L'une de ces techniques d'étalement de spectre, appelée étalement de spectre par séquence directe, consiste à émettre un signal s(t) obtenu en multipliant un signal numérique de données d(t) par un code d'étalement g(t). d(t) est un signal caractérisé par sa fréquence, appelée fréquence bit. Le code d'étalement g(t) est un signal pseudo-aléatoire caractérisé par sa fréquence, appelée fréquence chip, cette fréquence étant supérieure à la fréquence bit d'un facteur G connu appelé gain d'étalement ou facteur d'expansion de la bande. On a les relations :
- signal de données d(t):

$$d(t) = \sum_{k=-\infty}^{k=+\infty} d_n \delta(t-kT_b)$$

- code d'étalement g(t) :

$$g(t) = \sum_{k=-\infty}^{k=+\infty} g_n \delta(t-k_c)$$

- signal à transmettre s(t) :

$$s(t) = \sum_{k=-\infty}^{k=+\infty} d_{[\frac{k}{G}]} g_n \delta(t-kT_c)$$

où :

$T_b$ est l'inverse de la fréquence bit;

$T_c$ est l'inverse de la fréquence chip ;

[] est la partie entière.

Le décodage à la réception s'effectue en combinant le signal reçu avec une réplique locale de g(t) synchronisée sur l'émission. L'un des dispositifs connus de ce type est désigné par l'homme du métier par les termes "récepteur rake".

Les détecteurs à seuil sont utilisés dans plusieurs de ces systèmes, pour de nombreuses applications. C'est notamment le cas pour l'acquisition de la synchronisation dans les systèmes DS-CDMA (CDMA à séquence directe), ou de l'optimisation de l'estimation de la réponse impulsionnelle du canal de transmission dans les systèmes TDMA et CDMA.

D'une façon générale, les détecteurs à seuil de type connu calculent la corrélation entre une série de données transmises et une série de données de référence, puis comparent le résultat de cette corrélation à un seuil prédéterminé.

3

L'inconvénient majeur de ces détecteurs est que le seuil prédéterminé est fixé, une fois pour toute, alors que le résultat de la corrélation ne peut être analysé de façon fiable sans une connaissance instantanée des conditions de propagation.

Ainsi, dans le cas de la synchronisation d'un système CDMA, ce résultat de corrélation comprend une partie utile, correspondant à un rayon donné, et une partie nuisible, correspondant au bruit additif du canal et aux autres rayons du canal.

Il est donc maximum lorsqu'on a détecté le rayon d'amplitude maximale. On doit donc choisir a priori un seuil tel que la variable de décision soit supérieure à ce seuil pour le rayon maximum. Mais la fixation de ce seuil nécessite la connaissance a priori de l'amplitude de ce rayon maximum. Or il s'agit d'une variable aléatoire dont on ne connaît que la loi statistique, et non les valeurs instantanées.

Le seuil utilisé est donc en général un compromis, générateur de deux types de défauts. Soit il est trop faible (à un instant donné), et il introduit de fausses alarmes (dépassements du seuil alors que la synchronisation n'est pas acquise), soit il est trop haut, et il ne détecte pas des situations acceptables.

Dans de nombreux autres domaines, des seuillages sont également faits, qui supposent une connaissance a priori du rapport signal à bruit. C'est par exemple le cas dans les systèmes d'optimisation de l'estimation de canal, tels que décrits par exemple dans la demande de brevet française n° 92 11886. Or cette connaissance a priori n'est pas possible.

L'invention a notamment pour objectif de pallier ces inconvénients de l'état de la technique.

Plus précisément, un objectif de l'invention est de fournir un détecteur à seuil capable de s'affranchir des variations du canal de transmission d'un système de transmission numérique.

En d'autres termes, l'invention a pour objectif de fournir un tel détecteur à seuil qui soit indépendant du rapport signal à bruit.

Un autre objectif de l'invention est de fournir un tel détecteur à seuil qui, dans des conditions de multitrajet du signal, tire parti de manière positive des différents rayons de propagation.

Un objectif particulier de l'invention est de fournir un dispositif de synchronisation d'un système à étalement de spectre par séquence directe et accès multiple par répartition par codes utilisant un seuil de décision indépendant du rapport signal à bruit.

Un autre objectif particulier de l'invention est encore de fournir un dispositif d'optimisation d'une estimation de la réponse impulsionnelle du canal de transmission, tenant compte de la valeur du rapport signal à bruit.

L'invention a également pour objectif de fournir un dispositif d'estimation de la valeur du rapport signal à bruit.

Ces objectifs ainsi que d'autres qui apparaîtront par la suite, sont atteints selon l'invention par un détecteur à seuil pour récepteur d'un système de transmission de signaux numériques dans un canal de transmission, notamment vers des mobiles, comprenant des moyens de calcul d'un jeu de coefficients $f_n$, ledit jeu de coefficients $f_n$ appartenant au groupe comprenant d'une part un jeu de coefficients de corrélation entre une première série d'échantillons numériques reçue $x_n$ par ledit récepteur et une seconde série d'échantillons numériques de référence $p_n$ connue dudit récepteur, pour la recherche de la synchronisation du système, et d'autre part un jeu de coefficients $\hat{h}_n$ d'une estimée de la réponse impulsionnelle dudit canal de transmission, lorsque ledit système est déjà synchronisé,

et comprenant de plus des moyens de calcul d'une variable de décision A telle que :

$$A = \frac{\sum_{n=0}^{L-1} |f_n|^2}{\frac{1}{N} \sum_{n=0}^{N-1} |x_n|^2}$$

où L et N sont deux nombres entiers prédéterminés.

Cette nouvelle variable de décision permet de fonctionner de façon sûre sur une plage de rapports signal à bruit acceptable prédéfinie, indépendamment de la connaissance de ce rapport instantanée.

Préférentiellement, L est une valeur représentative de la longueur dudit canal de transmission.

Par ailleurs, N est avantageusement une valeur supérieure ou égale à au moins une des données appartenant au groupe comprenant:
- longueur desdites première et seconde séries d'échantillons ;
- valeur représentative de la rapidité de variation dudit canal de transmission ;

- longueur d'une salve (burst en anglo-saxon) de données;
- facteur d'étalement ou facteur d'expansion de la bande d'un signal à accès multiple par répartition par les codes par séquence directe.

Dans une application à l'acquisition de la synchronisation dans un système DS-CDMA, le détecteur comprend de façon avantageuse des moyens de comparaison de ladite variable de décision A à un seuil prédéterminé T délivrant une information de décision en fonction de ladite comparaison, ledit seuil prédéterminé T étant égal à :

$$T = \cfrac{1}{1 + \cfrac{1}{(S/B)_{min}}}$$

où $(S/B)_{min}$ est le rapport signal à bruit minimum définissant la plage d'opération $[(S/B)_{min}, +\infty[$ dudit système de transmission.

Selon un second mode de réalisation préférentiel, appliqué notamment à l'optimisation de l'estimée du canal de transmission, obtenue préalablement par corrélation ou tout autre méthode connue, A est comparé à un plusieurs seuils de façon à adapter la correction à apporter. Cette même approche est utilisable pour contrôler le déclenchement d'un égaliseur en AMRT, du récepteur Rake en DS-CDMA ou contrôler la puissance.

Outre un détecteur à seuil en tant que tel, l'invention porte également sur les dispositifs d'acquisition de synchronisation d'un récepteur de signaux à étalement de spectre par séquence directe et accès multiple par répartition par les codes comprenant un tel détecteur à seuil, et délivrant une information d'accrochage de la synchronisation, et sur les dispositifs d'estimation de la réponse impulsionnelle d'un canal de transmission, calculant un jeu de coefficients $\hat{h}_n$ d'une estimée du canal, comprenant ce détecteur à seuil et des moyens de correction dudit jeu de coefficients tenant compte de la valeur de ladite variable de décision.

L'invention concerne encore un dispositif d'estimation du rapport signal à bruit d'un canal de transmission, comprenant un tel détecteur à seuil et des moyens de calcul d'une estimation dudit rapport signal à bruit calculant la valeur :

$$\frac{\hat{S}}{B_{(dB)}} = 10\log\frac{A}{1 - A}$$

Ce dispositif d'estimation du rapport signal à bruit peut notamment être utilisé pour l'une des applications appartenant au groupe :
- contrôle de l'activation d'un égaliseur ;
- pondération des décisions d'un égaliseur d'un signal à accès multiple par répartition temporelle ;
- contrôle de l'activation de moyens de désétalement d'un signal à accès multiple par répartition par les codes ;
- contrôle de la puissance d'émission d'un signal.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :
- la figure 1 illustre le principe du calcul de la corrélation selon une méthode connue;
- la figure 2 est un schéma synoptique du détecteur à seuil de l'invention, dans une première application, à savoir l'acquisition de la synchronisation dans un système DS-CDMA;
- la figure 3 est un schéma synoptique du détecteur à seuil de l'invention, dans une seconde application, à savoir l'optimisation du calcul de la réponse impulsionnelle du canal dans un système CDMA ou AMRT.

Avant de présenter en détail l'invention, on montre ci-dessous de façon mathématique le défaut des détecteurs à seuil connu, dans le cas particulier de la synchronisation d'un système DS-CDMA.

On décrit ensuite le calcul de la variable de décision de l'invention, en en démontrant la validité, puis on présente trois applications préférentielles du détecteur de l'invention.

La variable de décision selon l'invention est indifféremment désignée par les lettres A ou V, selon les exemples décrits. Lorsque cela est nécessaire, elle est indicée par n, par rapport au temps.

## 1 - technique connue d'acquisition d'un signal pilote dans un système DS-CDMA

Dans un système a étalement de spectre par séquence directe et à accès multiple par répartition par code (DS-CDMA) (Direct Sequence - Code Division Multiple Access) la station de base émet en permanence un code dit code pilote. Ce code est une séquence pseudo-aléatoire connue des mobiles.

Dans un premier temps un mobile qui vient de s'allumer génère localement le code pilote et tente d'aligner

EP 0 643 504 A1

la réplique locale avec le code pilote reçu après son passage par le canal de propagation. Lorsque le code pilote généré localement est bien aligné le mobile peut alors venir désétaler le canal dit de synchronisation. Le canal de synchronisation est un canal qui envoie des données utiles au mobile, telles que l'horloge de la base, son identité etc..., ces données étant étalées par le code pilote.

Le mobile peut alors se mettre à communiquer avec la station de base. L'acquisition de la synchronisation est la première étape à suivre pour que le mobile puisse entrer dans le système.

Les solutions antérieures consistent à corréler le signal reçu avec une réplique locale du code pilote et à baser la décision d'accrochage de synchronisation sur le résultat de corrélation.

Dans une des solutions on calcule la corrélation pour des indices parcourant la période entière du code pilote et on sélectionne l'indice qui fournit le plus fort coefficient de corrélation. Il faut donc beaucoup de temps pour se synchroniser. Une autre solution antérieure consiste à comparer le résultat de corrélation à un seuil prédéterminé T. Mais la fixation de ce seuil est impossible sans une connaissance instantanée des conditions de propagations. En effet : soit

$x_n = x (nT_c)$ des échantillons de signal reçu ;

$p_{n0}$, $p_{n0-1}$, $p_{n0-2}$...$p_{n0-N+1}$ la portion de code pilote utilisée comme référence ;

N est la longueur de corrélation, par exemple égale à la période entière de la séquence, ou éventuellement plus courte.

A l'instant n on calcule une corrélation $c_n$ telle que :

$$c_n = \sum_{i=0}^{L-1} x_{n-i}.p_{n_0-i}$$

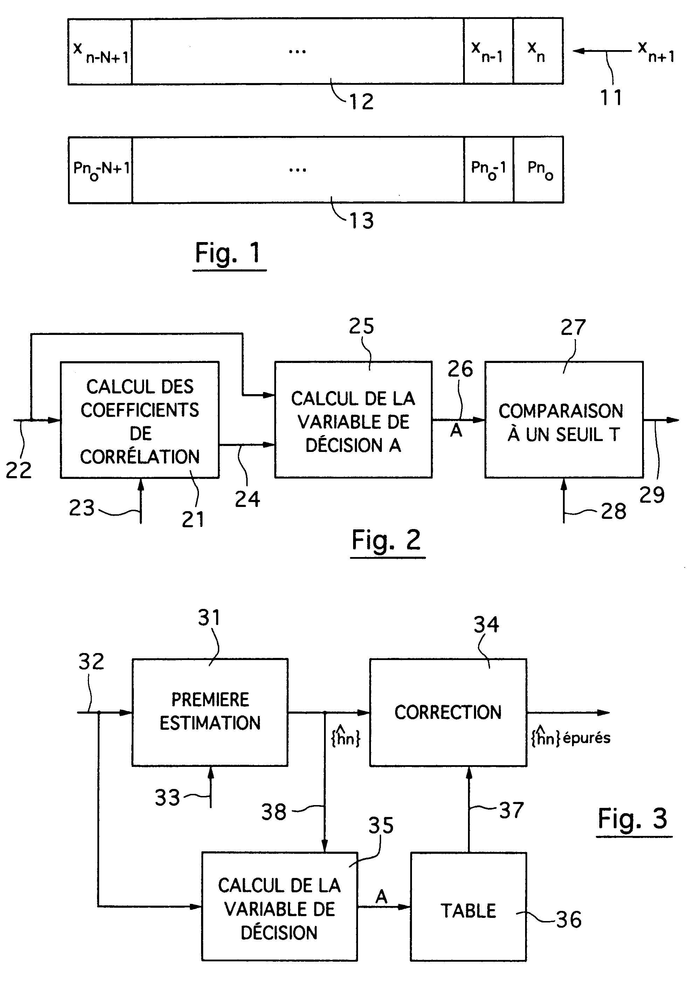

Ainsi que cela est illustré en figure 1, à chaque instant un nouvel échantillon rentre (11) dans un premier registre à décalage 12 contenant une portion de signal reçu et une nouvelle corrélation $c_n$ est calculée, avec des données $p_i$ stockées dans un second registre 13.

En considérant les coefficients $h_i$ de la réponse impulsionnelle du canal, on a:

$$c_n = \sum_{k=0}^{L-1} h_k.R_{n-k-n_0} + \frac{1}{N}\sum_{i=0}^{L-1} b(n-i).p^*(n_0-i)$$

où :

$R_{n-n0}$ est l'autocorrélation partielle du code pilote (corrélation sur N éléments) :

$$R_{n-n_0} = \frac{1}{N}\sum_{i=0}^{N-1} p(n-i).p^*(n_0-i)$$

b(n) sont les échantillons de bruit.

En supposant des auto-corrélations idéales on a :

$$R_k = \delta(k,0) = 1 \quad \text{si } k=0$$
$$= 0 \quad \text{sinon.}$$

D'où:

$$c_n = \frac{1}{N}\sum_{i=0}^{N-1} b(n-i).p^*(n_0-i)$$

pour:

6

$n < n_0$ ou $n > n_0 + L - 1$, et

$$c_n = h_{n-n_0} + \frac{1}{N}\sum_{i=0}^{N-1} b(n-i).p^*(n_0-i)$$

pour :

$n_0 \leq n \leq n_0 + L$,

où le premier terme représente la partie utile et le second terme le bruit.

Afin de minimiser la probabilité de fausse alarme (dépassement de seuil alors que la synchronisation n'est pas correcte) et de non détection on doit faire en sorte d'avoir $|c_n| >$ seuil, avec $|\text{partie utile}| / |\text{bruit}|$ maximal.

On cherchera donc à fixer un seuil T qui sera dépassé pour $h_{kmax}$ ou $k_{max}$ est tel que $|h_{kmax}| > |h_i|$ pour $i \neq k_{max}$

Dans ce cas il faut que :

$$c_{n_0+k_{max}} = h_{k_{max}} + \frac{1}{N}\sum_{i=0}^{N-1} b(n-i).p^*(n_0-i)$$

vérifie :

$|c_{n0+kmax}| > T.$

Or $h_{kmax}$ est une variable complètement aléatoire, et de manière instantanée

$$\frac{|h_{k_{max}}|^2}{|\frac{1}{N}\sum_{i=0}^{N-1} b(n-i).p^*(n_0-i)|^2}$$

est imprévisible.

Sans connaissance a priori de $h_{kmax}$ on ne peut fixer le seuil de détection. Dans le cas où les propriétés de corrélation du code pilote ne sont pas optimum alors on a

$$c_{n_0+k_{max}} = h_{k_{max}} + \sum_{k \neq k_{max}} h_i.R_{n-k-n_0} + \sum b(n-i).p^*(n_0-i)$$

Une connaissance même a priori des propriétés de corrélations du pilote, ne permet pas de fixer un seuil sans la connaissance des $h_l$.

## 2 - Calcul de la variable de décision de l'invention

### 2.1- cas de la recherche de synchronisation

On pose $T_c$ la durée d'un symbole du signal, et $\Delta$ le retard maximum induit par le canal. Le nombre maximum de trajets est donc $L = [\Delta/T_c] + 1$, où $[x]$ est la partie entière de x.

Soit encore $h_k(t)$ la valeur complexe des atténuations dues aux multitrajets.

Le signal reçu est:

$$x(t) = \sum_{k=0}^{L-1} h_k(t).p(t-kT_c) + b(t)$$

7

où b(t) est le bruit.

Au récepteur, x(t) est échantillonné à la fréquence $1/T_c$, de façon à obtenir les échantillons :

$$x(nT_c) = \sum_{k=0}^{L-1} h_k(nT_c).p((n-k).T_c) + b(nT_c)$$

Par simplification, on écrira par la suite :

$$x(n) = \sum_{k=0}^{L-1} h_k(n).p(n-k) + b(n) \qquad (1)$$

La détection de l'accrochage se fait à l'aide d'un corrélateur passif. On choisit donc une portion de longueur N de la séquence p(n) que l'on corrèle avec le signal reçu. La sortie du corrélateur vaut :

$$c_n = \frac{1}{N}\sum_{i=0}^{N-1} x(n-i).p^*(n_0-i)$$

où $(p(n_0),..., p(n_0-N+1))$ est la séquence de longueur N.

En remplaçant x(n-i) par l'équation (1), on obtient :

$$c_n = \frac{1}{N}\sum_{i=0}^{N-1} [\sum_{k=0}^{L-1} h_k(n-i).p(n-i-k) + b(n-i)].p^*(n_0-i)$$

soit, en supposant que $h_k(-i) = h_k$ est constant sur la durée de la corrélation :

$$c_n = \frac{1}{N}\sum_{k=0}^{L-1} h_k\sum_{i=0}^{N-1} p(n-i-k).p^*(n_0-i) + \frac{1}{N}\sum_{i=0}^{N-1} b(n-i).p^*(n_0-i)$$

On considère un cycle de la séquence pseudo-aléatoire p(n), et on pose $R_{n-n_0}$ la corrélation partielle :

$$R_{n-n_0} = \frac{1}{N}\sum_{i=0}^{n-1} p(n-i).p^*(n_0-i)$$

Alors:

$$c_n = \sum_{i=0}^{N-1} h_k.R_{n-k-n_0} + \frac{1}{N}\sum_{i=0}^{n-1} b(n-i).p^*(n_0-i)$$

Si $n = n_0 + k_0$, avec $k_0$ appartenant à $\{0,..., L-1\}$, le corrélateur capture le $k_0$-ième trajet :

$$c_{n_{k_0}} = \sum_{k=0/k \neq k_0}^{L-1} h_k.R_{n_{k_0}-k-n_0} + h_{k_0}.R_{n_{k_0}-k_0-n_0} + \frac{1}{N}\sum_{i=0}^{N-1} b(n_{k_0}-i).p^*(n_0-i)$$

soit, avec $n_{k0} = n_0 + k_0$ :

$$c_{n_0+k_0} = \sum_{k=0/k \neq k_0}^{L-1} h_k \cdot R_{k_0-k} + h_{k_0} \cdot R_0 + \frac{1}{N} \sum_{i=0}^{N-1} b(n_0+k_0-i) \cdot p^*(n_0-i)$$

On considère le cas idéal, et on suppose que :
- p(n) et b(n) sont indépendants;
- un bon estimateur de E(.) est :

$$\frac{1}{N} \sum_{i=0}^{N-1} (.)$$

- $R_n = \delta_{n,0}$.
Alors, quand n est différent de $n_0 + k_0$ :

$$c_n = \sum_{k=0}^{L-1} h_k \cdot \delta_{n-k-n_0,0} + E(b_n \cdot p_n^*)$$

Comme $n \neq n_0+k_0$, $n-k-n_0 \neq 0$, et
$E(b_n.p_n*) = E(b_n).E(p_n*) = 0$, car $E(p_n*) = 0$, on a :
$c_n = 0$       si $n \neq n_0 + k_0$, et
$c_n = h_{k0}$       si $n = n_0 + k_0$.
Si on somme L résultats de corrélation élevés au carré :

$$T_n = \sum_{j=0}^{L-1} |c_{n-j}|^2$$

On vérifie que $T_n$ est maximum pour $n = n_0+L-1$, et alors :

$$T_{n_0+L-1} = \sum_{k=0}^{L-1} |h_k|^2$$

On considère maintenant l'estimée de l'énergie du signal x(n) :

$$e(n) = \frac{1}{N} \sum_{i=0}^{N-1} |x(n-i)|^2$$

On peut vérifier que, dans le cas idéal :

$$e(n) = \sum_{k=0}^{L-1} |h_k|^2 + E(b_n^2)$$

Soit $V_n$ la variable de détection suivante :

$$V_n = \frac{T_n}{e(n)}$$

$V_n$ correspond à la variable A décrite précédemment dans la présentation générale de l'invention. L'indice n est introduit pour représenter le temps. On a: $t=nT_c$. A n'était pas indicé car référencé par rapport au temps $t=0$, par généralisation et simplification.

Dans le cas idéal :
- si $n < n_0$ or $n \geqq n_0+2L-1$: $\quad V_n = 0$
- si $n = n_0 + k_1$ $\quad$ $k_1$ appartenant à $\{0,..., L-1\}$:

$$V_n = \frac{\displaystyle\sum_{j=0}^{k_1} |h_j|^2}{\displaystyle\sum_{k=0}^{L-1} |h_k|^2 + E(b_n^2)}$$

- si $n = n_0 + L + k_1$ $\quad$ $k_1$ appartenant à $\{0,...,L-2\}$:

$$V_n = \frac{\displaystyle\sum_{j=k_1+1}^{L-1} |h_j|^2}{\displaystyle\sum_{k=0}^{L-1} |h_k|^2 + E(b_n^2)}$$

$V_n$ est maximum quand $n = n_0+L-1$ :

$$V_{n_0+L-1} = \frac{1}{1+\dfrac{E(b_n^2)}{\displaystyle\sum_{k=0}^{L-1} |h_k|^2}}$$

Pour détecter l'acquisition de la synchronisation le seuil de $V_n$ est donné par $V_{n0+L-1}$ pour un niveau d'énergie donné. Par exemple, si on veut détecter l'acquisition pour tout rapport signal à bruit supérieur à $(SNR)_{min}$, le seuil sera S :

$$S = \frac{1}{1+\dfrac{E(b_n^2)}{\displaystyle\sum_{k=0}^{L-1} |h_k|^2}}$$

On note que l'énergie du signal sans bruit est :

$$A.\sum_{k=0}^{L-1} |h_k|^2$$

donc :

$$S = \cfrac{1}{1 + \cfrac{1}{(SNR)_{min}}}$$

Un tel seuil permet de détecter toutes les situations où le rapport signal à bruit (SNR ou S/B) est supérieur $SNR_{min}$.

## 2.2 - Cas des systèmes déjà synchronisés

On calcule tout d'abord e(n) :

$$e(n) = \frac{1}{N}\sum_{i=0}^{N-1} |x_{n-i}|^2$$

avec :

$$x_{n-i} = \sum_{l=0}^{L-1} h_l s_{n-i-l}$$

Le symbole émis est ici $s_i$ et non $p_i$ puisqu'il ne s'agit pas obligatoirement de l'émission d'une séquence de référence, mais éventuellement d'un burst. On a donc:

$$e(n)=\sum_{k=0}^{L-1} \sum_{l=0}^{L-1} h_k h_l^* R_{s_{n-k,n-l}} + \frac{1}{N}\sum_{i=0}^{N-1} |b(n-i)|^2 + 2Re\{\sum_{k=0}^{L-1} h-k \frac{1}{N}\sum_{i=0}^{N-1} s(n-i-k).b^*(n-i)\}$$

où $R_s$ est la corrélation du signal s.

Avec les mêmes hypothèses que précédemment, c'est-à-dire :

- $R_{s(n-k, n-1)} = \delta_{k,l}$
- e(n) est un bon estimateur de l'énergie: $e(n)/E(b_n)^2 \sim S/B$.

On obtient :

$$e(n) = \sum_{k=0}^{L-1} |h_n|^2 + E(b_n^2)$$

En supposant que $h_n \approx \hat{h}_n$, on déduit que la variable A (ou $V_n$) est semblable à $1/(1+(S/B)^{-1})$.

## 3 - Première utilisation de la variable de décision de l'invention : acquisition de la synchronisation dans un système DS-CDMA

Dans cette première application de l'invention, on veut que le système d'acquisition de la synchronisation fonctionne dans la plage $[(S/B)_{min}, +\infty [$ de rapport signal à bruit.

La figure 2 est un schéma synoptique du dispositif d'acquisition selon l'invention. Il comprend tout d'abord un module 21 de calcul de la corrélation entre une séquence pilote reçue 22 et une séquence pilote de référence 23 stockée en interne.

A chaque instant n on calcule une valeur de corrélation $c_n$, à partir de deux registres 12 et 13, ainsi que cela est illustré en figure 1. Le registre 12 contient les échantillons reçus ($x_n$) et le registre 13 la section de référence ($p_n$) du code pilote.

Le résultat 24 ($c_n$) de la corrélation est transmis à un module 25 de calcul de la valeur de la variable de décision selon l'invention. Ce module reçoit également les valeurs reçues 22, et calcule à l'instant n :

$$V_n = \frac{\sum_{j=0}^{L-1} |c_{n-j}|^2}{\frac{1}{N}\sum_{j=0}^{N-1} |x_{n-j}|^2}$$

Les $c_{n-j}$ pour j=1 à N-1 sont les coefficients de corrélations des instants précédents.

A chaque instant, on calcule donc $c_n$, $\Sigma |x_{n-j}|^2$ et $V_n$.

Cette valeur 26 de $V_n$ est transmise à un comparateur 27, qui assure la comparaison avec un seuil 28 égal à :

$$T = \frac{1}{1 + \dfrac{1}{(S/B)_{min}}}$$

où $(S/B)_{min}$ est le rapport signal à bruit minimum à partir duquel le signal doit fonctionner.

Le comparateur 27 délivre une information 29 représentative de la comparaison.

Si $V_n < T$, alors on conserve les valeurs $c_n$ à $c_{n-N+2}$, on fait progresser d'un cran le registre 12 et on recommence les calculs. Si $V_n \geqq T$, la synchronisation est considérée acquise.

### 4 - Deuxième utilisation de la variable de décision de l'invention : optimisation de l'estimation du canal de transmission

On connaît, par le document de brevet français n° 92 11886 un dispositif d'optimisation du calcul d'une estimée de la réponse impulsionnelle du canal, que le détecteur selon l'invention permet d'améliorer.

Le dispositif est illustré en figure 3. Il comprend tout d'abord un module 31 de calcul d'une première estimation du canal, par exemple par corrélation entre une séquence reçue 32 et une séquence de référence 33, sur une longueur assez grande afin de ne pas manquer les trajets qui se trouveraient éloignés du premier trajet d'un certain nombre de symboles. Toute autre méthode de calcul connue peut bien sûr être utilisée. Puis un module 34 de correction élimine un certain nombre de coefficients calculés, selon un ou plusieurs critères particuliers (tels que ceux cités dans le document de brevet FR-92 11886), par seuillage.

Un module 35 calcule la variable de décision A selon l'invention, à partir des échantillons $x_n$ 32 et des coefficients { $\hat{h}_n$ } 38 de l'estimation fournis par le module 31, et délivre cette variable A à une table 36, qui permet d'adapter (37) la correction effectuée par le module 34 en fonction de cette variable, et donc du rapport signal à bruit.

En effet, selon la technique antérieure du document de brevet FR-9211886, les seuils utilisés pour décider de la sélection des coefficients sont fixes et liés à une connaissance a priori du rapport signal à bruit. L'utilisation de la variable A de l'invention permet de s'affranchir d'une connaissance a priori de S/B et permet d'avoir un critère dynamique de sélection 34 des coefficients. Par exemple, le module 34 décide du nombre de coefficients à éliminer, et/ou de la portion de la réponse impulsionnelle à conserver, etc... Plus généralement, A permet de déterminer les paramètres nécessaires à la sélection des coefficients par le module 34.

On a montré que A est équivalent à $1/(1+(S/B)^{-1})$ quand le système est synchronisé. De manière générale, plus A est élevé, meilleur est le rapport S/B, et donc moins on a besoin de nettoyer l'estimation de canal.

La correction 34 peut par exemple consister à rejeter un nombre variable p de coefficients de la réponse impulsionnelle du canal d'énergie croissante, tel que la somme des carrés des modules des p coefficients rejetés soit inférieure à une fraction (C) de la somme (T) de tous les carrés des coefficients et tel que la somme des carrés des modules des p+1 coefficients d'énergie croissante soit supérieure à CT.

Selon l'invention, cette valeur C 37 n'est plus fixe, mais dépend de A. La table 36 effectue l'allocation suivante :

si $A>A_0$      alors $C=C_0$

si $A_1<A<A_0$      alors $C=C_1$

...

si $A_{i+1}<A<A_i$ alors $C=C_{i+1}$

Avec $A_{i+1}<A_i<...<A_0$ et $C_{i+1}<C_i<...<C_0$

La relation $C_i=f(A_i)$ peut se trouver par simulation. On calcule donc A et par comparaison avec les $A_i$ on

en déduit la portion C à conserver.

A peut également être utilisé pour contrôler l'élimination des coefficients de la réponse impulsionnelle du canal dont le module est inférieur à une portion C' du module du plus fort des coefficients. On peut encore éliminer les coefficients de la réponse impulsionnelle dont le module est inférieur à un seuil donné fonction de A. Enfin, on peut éliminer un nombre donné de coefficients, toujours en fonction de A.

## 5 - Troisième utilisation de la variable de décision de l'invention : estimation du rapport signal à bruit

On a déjà indiqué que, quand le système est synchronisé, la variable A selon l'invention est semblable à $1/(1+(S/B)^{-1})$. Il est donc aisé dans déduire l'estimation du rapport signal à bruit suivante :

$$\frac{\hat{S}}{B_{(dB)}} = 10\log\frac{A}{1-A}$$

Pour éviter une division par zéro, on remplacera systématiquement A par une valeur telle que 0,999 si A vaut 1.

Cette estimation du rapport signal à bruit trouve de très nombreuses applications dans le domaine des transmissions numériques, telles que :
- le déclenchement d'un égaliseur ou d'un dispositif de désétalement (rake receiver en anglo-saxon) :

A partir de A, on déduit S/B. Si S/B est très mauvais, on ne tentera même pas d'égaliser un paquet en TDMA ou de désétaler un signal en CDMA (les limites de S/B dépendent du système).

On remplacera les symboles estimés par des effacements.

Plus généralement, si A est inférieur à un seuil prédéterminé, on peut décider de déconnecter l'égaliseur ou le "rake receiver".
- la pondération des décisions d'un égaliseur pour le décodage de canal en TDMA:

Les égaliseurs à décisions souples (soft decision en anglo--saxon), tels que ceux mettant en oeuvre l'algorithme de Viterbi, associent à chaque bloc ou "burst" égalisé une indication de la qualité de la réception qui pourra être utilisée par le décodeur de canal. Cette indication peut être l'estimation de S/B, ou A directement.

On pourra par exemple remplacer le mode de calcul usuel des décisions souples (tel que décrit par exemple dans l'article "A Viterbi algorithm with soft decision outputs and its applications", J. Hagenauer, P. Höher ; Proceedings of the IEEE Globecom '89, Dallas, 1989, p.47), par l'association de la valeur A ou S/B à tous les bits ou symboles du burst égalisé.
- le contrôle de la puissance :

Certains systèmes de contrôle de la puissance en TDMA sont basés sur une estimation de la qualité de la transmission, et non seulement sur le simple niveau de puissance reçue. En CDMA, la majeure partie des algorithmes de contrôle de puissance est basée sur une estimation de S/B. S/B peut à nouveau être déduit de A, ou les algorithmes de contrôle de puissance tenir compte directement de A.

Ces applications de l'invention sont bien sûr données à titre de simples exemples non restrictifs. Le détecteur à seuil de l'invention peut s'appliquer à de nombreux autres domaines, qui apparaîtront aisément à l'homme du métier.

## Revendications

1. Détecteur à seuil pour récepteur d'un système de transmission de signaux numériques dans un canal de transmission, notamment vers des mobiles, comprenant des moyens (21; 31) de calcul d'un jeu de coefficients $f_n$ (24 ; 38), ledit jeu de coefficients $f_n$ appartenant au groupe comprenant d'une part un jeu de coefficients $c_n$ (24) de corrélation entre une première série d'échantillons numériques reçue $x_n$ par ledit récepteur et une seconde série d'échantillons numériques de référence $p_n$ connue dudit récepteur, pour la recherche de la synchronisation dudit système, et d'autre part un jeu de coefficients $\hat{h}_n$ (38) d'une estimée de la réponse impulsionnelle dudit canal de transmission, lorsque ledit système est déjà synchronisé,

caractérisé en ce qu'il comprend des moyens (25 ; 35) de calcul d'une variable de décision A telle que :

$$A = \frac{\displaystyle\sum_{n=0}^{L-1} |f_n|^2}{\dfrac{1}{N}\displaystyle\sum_{n=0}^{N-1} |x_n|^2}$$

où L et N sont deux nombres entiers prédéterminés.

2. Détecteur à seuil selon la revendication 1, caractérisé en ce que L est une valeur représentative de la longueur dudit canal de transmission.

3. Détecteur à seuil selon l'une quelconque des revendications 1 et 2, caractérisé en ce que N est une valeur supérieure ou égale à au moins une des données appartenant au groupe comprenant:
   - longueur desdites première et seconde séries d'échantillons ;
   - valeur représentative de la rapidité de variation dudit canal de transmission ;
   - longueur d'une salve de données ;
   - facteur d'étalement ou facteur d'expansion de la bande d'un signal à accès multiple par répartition par les codes par séquence directe.

4. Détecteur à seuil selon l'une quelconque des revendication 1 à 3, caractérisé en ce que ladite première série d'échantillons reçue correspond à un code pilote d'un signal à accès multiple par répartition par les codes par séquence directe,
   et en ce qu'il comprend des moyens (27) de comparaison de ladite variable de décision A à un seuil prédéterminé T délivrant une information de décision en fonction de ladite comparaison, que ledit seuil prédéterminé T étant égal à :

$$T = \frac{1}{1 + \dfrac{1}{(S/B)_{min}}}$$

où $(S/B)_{min}$ est le rapport signal à bruit minimum définissant la plage d'opération $[(S/B)_{min}, +\infty\ [$ dudit système de transmission.

5. Dispositif d'acquisition de synchronisation d'un récepteur de signaux à étalement de spectre par séquence directe et accès multiple par répartition par les codes caractérisé en ce qu'il comprend un détecteur à seuil selon l'une quelconque des revendications 1 à 4 délivrant une information d'accrochage de la synchronisation.

6. Dispositif d'estimation de la réponse impulsionnelle d'un canal de transmission, calculant un jeu de coefficients $\hat{h}_n$ d'une estimée du canal, caractérisé en ce qu'il comprend un détecteur à seuil selon l'une quelconque des revendications 1 à 3,
   et en ce que ledit dispositif comprend des moyens de correction dudit jeu de coefficients en fonction d'au moins un seuil variable en fonction de ladite variable de décision.

7. Dispositif d'estimation du rapport signal à bruit d'un canal de transmission, calculant un jeu de coefficients $\hat{h}_n$ d'une estimée du canal, caractérisé en ce qu'il comprend un détecteur à seuil selon l'un quelconque des revendications 1 à 3, et en ce qu'il comprend des moyens de calcul d'une estimation dudit rapport signal à bruit calculant la valeur :

$$\frac{\hat{S}}{B_{(dB)}} = 10\log\frac{A}{1-A}$$

8. Utilisation du dispositif d'estimation du rapport signal à bruit selon la revendication 7 pour l'une des applications appartenant au groupe :
   - contrôle de l'activation d'un égaliseur ;
   - pondération des décisions d'un égaliseur d'un signal à accès multiple par répartition temporelle ;
   - contrôle de l'activation de moyens de désétalement d'un signal à accès multiple par répartition par les codes ;
   - contrôle de la puissance d'émission d'un signal.

Fig. 1

Fig. 2

Fig. 3

**Office européen des brevets**

## RAPPORT DE RECHERCHE EUROPEENNE

Numero de la demande

EP 94 40 2034

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB-A-2 214 034 (CLARION CO. LTD.)<br>* page 1, ligne 13 - page 26, ligne 6; figure 3 *<br>* page 6, ligne 14 - page 9, ligne 26; figure 1 *<br>--- | 1 | H04J13/00 |
| A | IEEE TRANSACTIONS ON COMMUNICATION TECHNOLOGY,<br>vol.COM-19, no.6, Décembre 1971, NEW YORK US<br>pages 1163 - 1172<br>CAHN 'Performance of Digital Matched Filter Correlator with Unknown Interference'<br>* page 1167, colonne de gauche, ligne 35 - colonne de droite, ligne 6; figure 3 *<br>----- | 1 | |
| | | | **DOMAINES TECHNIQUES RECHERCHES (Int.Cl.6)**<br>H04B<br>H04J<br>H04L |

Le présent rapport a été établi pour toutes les revendications

| Lieu de la recherche | Date d'achèvement de la recherche | Examinateur |
|---|---|---|
| LA HAYE | 19 Décembre 1994 | Bossen, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)